# FASCICULE DE BREVET EUROPEEN

(11) **EP 2 574 544 B1**
(45) Date de publication et mention de la délivrance du brevet: **27.08.2014**
(21) Numéro de dépôt: 12186411.0
(22) Date de dépôt: 27.09.2012
(51) Int. Cl.: B64D 13/00

(54) **Procédé d'intégration d'une baie avionique ainsi que structure de plancher de mise en oeuvre**
Verfahren zur Integration eines Avionikraums sowie Bodenstruktur zur Umsetzung dieses Verfahrens
Method of integrating an avionics bay and floor structure for implementing the method

(30) Priorité: 30.09.2011 FR 1158843
(43) Date de publication de la demande: 03.04.2013
(73) Titulaire: Airbus Opérations SAS, 31060 Toulouse (FR)
(72) Inventeur: Guerin, Bernard, 31850 Montrabe (FR); Durand, Yves, 31840 Aussonne (FR)
(74) Mandataire: Gevers France

(56) Documents cités:
- WO-A2-2009/106430
- FR-A1- 2 833 241
- US-A- 4 153 225

## Description

### DOMAINE TECHNIQUE

L'invention se rapporte à un procédé d'intégration d'une baie avionique dans une structure de plancher d'un aéronef, ainsi qu'à une structure de plancher d'aéronef, en particulier de cockpit, intégrant une telle baie.

En application principale, l'invention concerne la mise en place optimisée d'une baie avionique regroupant un ou plusieurs meubles électriques et/ou électroniques, intégrant les équipements électriques et/ou électroniques, par exemple particulier les calculateurs et leurs fonctions avioniques. La ventilation de ces meubles dans un tel espace encombré est un aspect du domaine de l'invention qui peut être pris en considération.

### ÉTAT DE LA TECHNIQUE

Jusqu'à présent, les meubles tels que les baies électriques et/ou électroniques sont classiquement disposés verticalement et intégrés en soute sous le cockpit tout en s'étendant en partie dans le volume cargo situé sous l'espace dédié à la cabine de passagers. Les termes « vertical », « horizontal », « supérieur », « inférieur », ainsi que leurs dérivés, se rapportent à des positions en mode d'utilisation standard en référence à la gravité universelle.

Ces meubles sont classiquement disposés verticalement et sont constitués sur la base d'un châssis porteur comprenant au moins deux montants sur lesquels sont montés des étagères horizontales. Les étagères et les montants sont agencés en caissons étanches à simple ou double compartiment. Ces caissons assurent une fonction structurale ainsi qu'une fonction de circulation d'air intégré.

Les étagères servent de support aux modules électroniques (calculateurs, cartes, disques additionnels, équipements électroniques, modules de puissance, etc.) via des racks intermédiaires standardisés. Ces racks assurent tant la liaison mécanique que la connexion électrique de chaque module logé dans le rack.

Sur la face arrière du meuble, un réseau électrique intermédiaire assure pour chaque module, ou chaque interconnexion entre modules, la liaison au réseau électrique extérieur dit « réseau avion » via des platines de coupure.

Sur la face avant, un accès aisé aux calculateurs est aménagé pour les intégrer et les remplacer rapidement lors d'une détection de fonction défectueuse en phase de maintenance ou de contrôle pré-vol.

Ces accès en faces avant et arrière sont facilités par la position verticale des meubles.

Dans un standard plus récent d'intégration sous forme de « cabinet », un seul rack dit « maxi rack » occupe toute une étagère. L'intégration électrique arrière est alors simplifiée car tous les connecteurs électriques étant distribués sur une même carte-mère intégrée au cabinet. Dans ce cabinet, les fonctions électriques sont distribuées par des cartes de type « blade » (« lame » en terminologie anglaise, ce terme évoquant la faible épaisseur relative des cartes). Les cabinets sont regroupés dans un caisson ou disposés individuellement à l'instar des étagères.

Les modules électroniques dissipant de la chaleur et étant sensibles aux températures élevées ainsi qu'aux variations de température, il est avantageux de les ventiler. A cette fin, il est classiquement prévu de refroidir chaque module par le soufflage d'un flux d'air frais qui traverse le module puis d'extraire l'air chaud au-dessus de chaque module. Le meuble est interconnecté au circuit général de ventilation de l'aéronef.

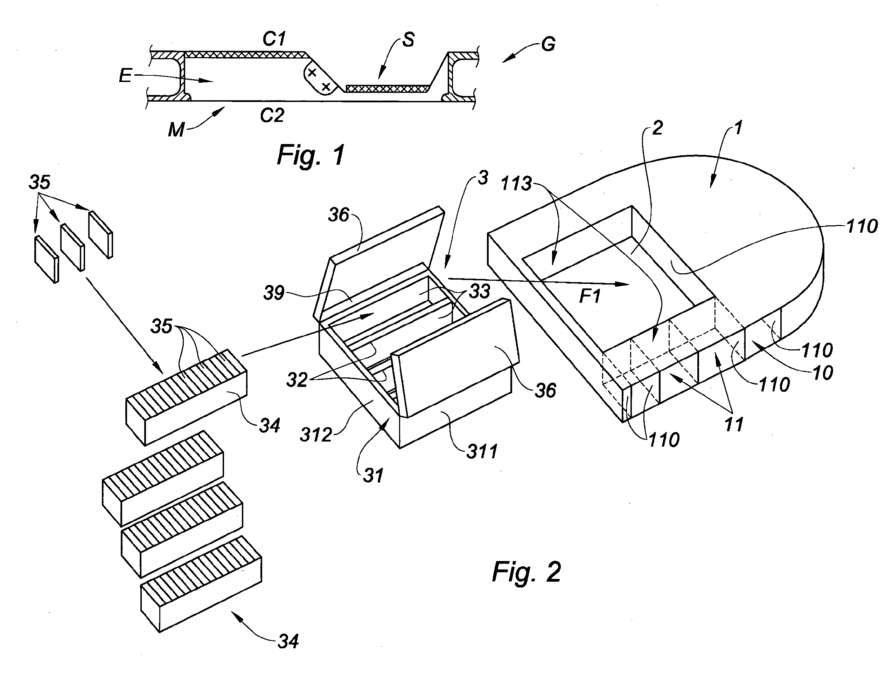

Afin d'optimiser l'espace disponible et d'augmenter ainsi le nombre de modules, il est connu d'intégrer le circuit de refroidissement directement dans le châssis du meuble pour assurer un échange thermique avec l'air circulant dans le caisson. Ainsi, comme illustré par la vue en coupe d'une étagère G selon la figure 1, une canalisation de soufflage d'air S et une canalisation d'extraction d'air E dans un montant M de l'étagère G - entre deux compartiments C1 et C2 de logement de calculateurs - permettent un échange thermique d'air.

Par ailleurs, les meubles sont en général fixés à la structure de l'aéronef par des liaisons par tenon (de type Chappe) et bielle. Une liaison globale isostatique est ainsi obtenue par rapport à la structure aéronef, ce qui permet de prendre en compte les déformations de la structure de l'aéronef.

Cependant, il est à présent recherché d'installer les baies électriques et/ou électroniques dans des espaces sécurisés car ces baies, qui intègrent de plus en plus l'ensemble des fonctions de commande et de contrôle, sont d'une importance vitale. Un espace sécurisé approprié serait en particulier le cockpit de l'aéronef.

L'intégration de tels meubles dans un cockpit n'a pu jusqu'à présent être concrétisée du fait des problèmes d'encombrement qu'une telle installation entraîne, difficilement compatibles avec une ventilation des baies ou meubles avioniques intégrant des circuits électroniques.

Le document FR-2933241 montre un système de logement sous plancher pour boîtes électroniques et est regardé comme l'art antérieur le plus proche.

### EXPOSÉ DE L'INVENTION

L'invention vise à s'affranchir de ces inconvénients en proposant une intégration de baie avionique, avantageusement de grande capacité de logement de fonctions électriques/électroniques, dans une zone de plancher, l'intégration pouvant être associée à une ventilation appropriée à cet emplacement.

Plus précisément, la présente invention a pour objet un procédé d'intégration d'une baie avionique dans une structure de plancher d'un aéronef , tel que défini par la revendication 1. Un espace est préalablement libéré dans la structure de plancher. La baie est ensuite intégrée en position horizontale dans cet espace aménagé. Un accès direct à cette baie en face supérieure est aménagé au niveau du plancher par une protection faisant également fonction de plancher.

De manière préférée, une ventilation forcée de la baie peut être réalisée par un soufflage d'air frais distribué verticalement à partir de la paroi inférieure de la baie puis extrait après échange thermique par la paroi supérieure. Par ailleurs, un transfert de charge par cisaillement est réalisé par un renforcement du volume structural autour dudit espace. De plus, un accès en face inférieure de la baie peut également être aménagé à partir de la soute de pointe avant.

Selon des particularités avantageuses, le procédé selon l'invention prévoit également une fonction de fourniture d'air frais latéralement entre les parois supérieure et inférieure avant d'être dévié vers la paroi inférieure puis distribué verticalement depuis la paroi inférieure, une fonction d'étanchéité et de drainage de fluide hors de la baie, et/ou une fonction de collecteur d'air dédiée au capot en vue d'une extraction par un écoulement d'air canalisé.

L'invention se rapporte également à une structure de plancher d'aéronef, en particulier d'un cockpit, apte à intégrer au moins une telle baie selon le procédé ci-dessus, comme défini par la revendication 8. Cette structure comporte un plancher de marche et un volume structural étayé par des traverses sur lequel repose le plancher. Les traverses et le plancher sont découpés de sorte qu'un espace est libéré dans le volume structural pour y intégrer la baie en position horizontale.

De manière avantageuse, des ouvertures latérales formées dans le châssis sont aptes par couplage avec des parois verticales à permettre un soufflage d'air frais ascensionnel à partir de la paroi inférieure de la baie jusqu'au capot supérieur et une extraction d'air par un extracteur en face supérieure. Par ailleurs, au droit et entre les poutrelles découpées, des voiles de transfert de charge sont agencés. De plus, la baie peut comporter un châssis périphérique articulé avec au moins un capot de protection d'accès direct à cette baie au niveau du plancher et une ouverture arrière d'accès en face inférieure. En outre, la baie, intégrée en position horizontale dans cet espace, peut être solidarisée par des moyens de fixation ponctuels au plancher et/ou aux poutrelles découpées.

Selon certains modes de réalisation préférés :
- la baie est compartimentée en caissons comportant des parois verticales aptes à permettre le soufflage d'air frais ascensionnel dans chaque compartiment ;
- le volume structural du plancher est compartimenté en caissons ;
- les ouvertures latérales sont équipées de diaphragme ;
- les parois et le capot sont agencés en liaison avec les voiles raidisseurs perforés.

L'invention s'applique en particulier à la structure de plancher d'un cockpit d'aéronef qui est un espace sécurisé privilégié, le volume structural du plancher séparant alors le cockpit de la soute de pointe avant. Le plancher d'autres zones de l'aéronef peut également être utilisé, en particulier celui de zones de passage dédiées (cuisine, toilettes, etc.).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en coupe d'une étagère de meuble avionique (déjà commentée) ;
- la figure 2, une vue schématique éclatée de l'assemblage d'une baie avionique à maxi racks dans une structure de plancher selon l'invention ;
- les figures 3a à 3c, des vues schématiques en perspective (figure 3a), en coupe et perspective partielle agrandie (figure 3b) et en coupe (figure 3c) d'une baie avionique ventilée selon l'invention ; et
- les figures 4a et 4b, des vues partielles en perspective depuis l'avant et depuis l'arrière du cockpit en cours d'aménagement, respectivement avant et après l'intégration d'une baie avionique au plancher conformément à l'invention.

### DESCRIPTION DÉTAILLÉE

Les qualificatifs « avant », arrière », « latéral » et leurs dérivés utilisés dans la présente description définissent des positions d'éléments par rapport au positionnement relatif standard de ces éléments dans un avion disposé au sol.

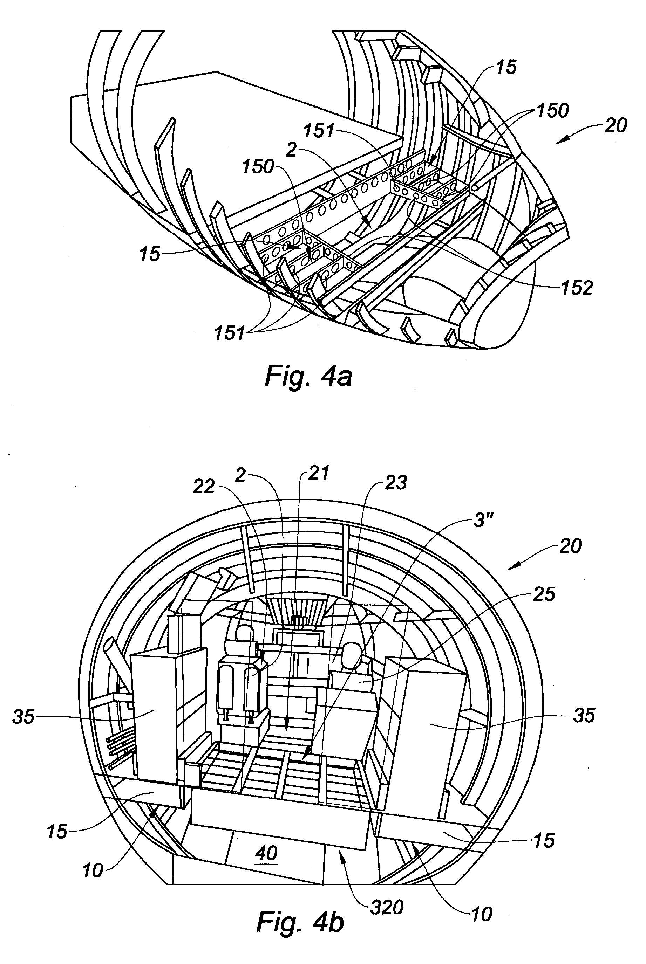

L'exemple décrit en référence à la vue globale de la figure 2 se rapporte à un plancher de cockpit. Le plancher de marche de cockpit 1 est percé afin de libérer un volume 2 dans sa structure 10 pour loger une baie avionique 3 selon la flèche F1. Un emplacement avantageux pour ce volume 2 se situe dans le couloir d'accès aux postes de pilotage (voir figure 4).

La structure de plancher 10 est constituée par des caissons 11 dont les parois sont des traverses 110. Cette structure de plancher 10 est libérée par découpe des traverses 110 sur une longueur appropriée (quelques traverses sont représentés schématiquement en pointillés). Des voiles raidisseurs 113 sont solidarisés au droit et entre ces découpes afin de favoriser le transfert de charge sur la structure de plancher non découpée. Le volume 2 est limité longitudinalement par ces voiles 113 et transversalement par des traverses 110 non découpées. Les dimensions du volume 2 sont sensiblement celles de la baie 3 à intégrer.

La baie avionique 3 quant à elle est un meuble constitué d'un châssis porteur 31 et de cloisons internes longitudinales 32 formant des étagères 33 aptes à accueillir, dans cet exemple, des racks 34 sur toute leur longueur dit « maxi racks ». Ces maxi racks logent de minces modules au format de cartes 35. Le châssis 31 se compose de deux parois longitudinales 311 et de deux parois transversales 312 en fonction de leur position après intégration.

De plus, la baie 3 est fermée par deux capots 36 relativement épais, par exemple de l'ordre de 50 à 60 mm d'épaisseur, par rapport à l'épaisseur du châssis et des cloisons, afin de conserver une résistance équivalente au reste du plancher 1. Cet aspect multifonctionnel des capots qui font office de plancher permet un gain en masse et en coût. Les parois 311, 312 et le capot 36 de la baie 3 sont agencés en liaison avec les voiles raidisseurs 113.

Ces capots assurent non seulement la fonction de plancher de marche et de protection mécanique de la baie, mais également de protection contre les pénétrations de fluides diverses. A ce titre, chaque capot est étanche et dispose de joints 39 de liaison avec le châssis 31 particulièrement choisis pour leur étanchéité.

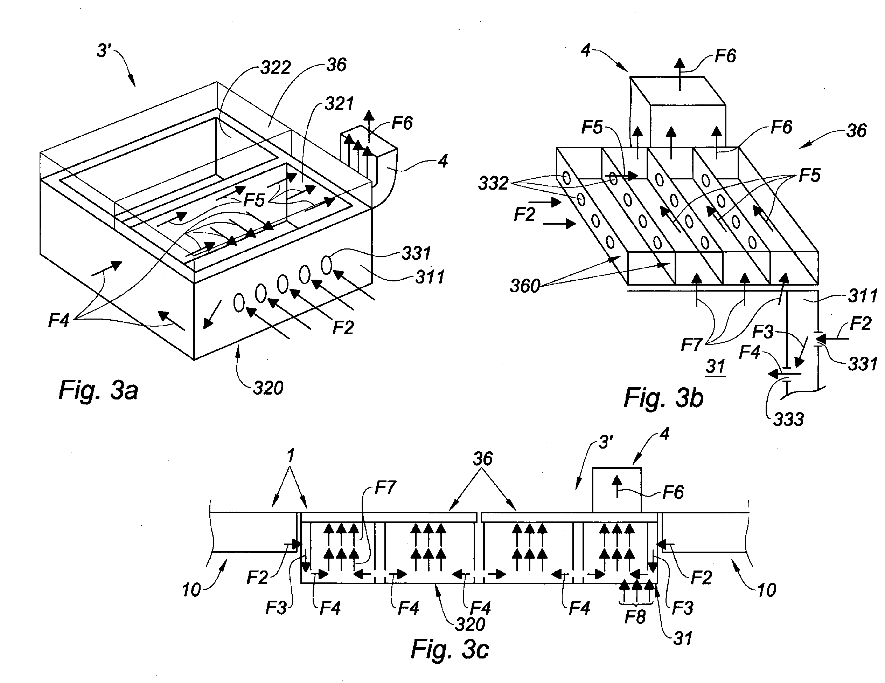

La ventilation d'un meuble avionique, une fois intégré dans la structure du plancher 10, est maintenant décrite en référence aux schémas des figures 3a à 3c.

La vue en perspective de la figure 3a, concernant un exemple de baie avionique simplifiée 3' à deux compartiments 321 et 322, montre que les parois longitudinales 311 présentent des orifices calibrées 331 d'entrée de soufflage d'air frais conformément à l'écoulement symbolisé par les flèches parallèles F2. Sur la figure, la ventilation d'un seul compartiment 321 est décrite, celle de l'autre compartiment 322 étant en tout point semblable.

L'air frais circule ensuite dans la paroi longitudinale 311 pour être orienté vers le fond 320 du compartiment 321 (flèche F3) puis pour circuler (flèches F4) dans celui-ci à partir du fond. L'air remonte vers le haut du meuble 3' (flèches F5) et sort de celui-ci via l'extracteur 4 (Flèche F6) solidarisé en bordure du capot 36 (représenté en transparence).

Sur la vue agrandie en coupe et perspective partielle de la figure 3b, le couvercle 36 apparaît lui-même compartimenté par des raidisseurs longitudinaux 360 permettant de canaliser l'air provenant d'orifices 332 formés dans les parois du couvercle 36 et dimensionnés dans les limites structurales. Les flèches F5 indiquent l'écoulement de l'air dans le couvercle 36. L'air provenant des orifices 331 passe dans la paroi 311 du châssis 31 puis est dévié vers le fond du châssis (flèche F3) du fait de la position inférieure de l'orifice interne 333 de la paroi 311.

La vue en coupe de la figure 3c reprend le même fléchage pour indiquer la circulation de l'air dans la baie 3' : les flèches F2 illustrent l'écoulement de l'air provenant de la structure 10, les flèches F3 la déviation vers le fond du châssis, les flèches F4 la circulation dans l'un ou l'autre des sens au niveau de la paroi de fond 320, les flèches F7 la remontée de l'air et la flèche F6 son extraction dans l'extracteur 4. L'air peur également provenir (flèches F8) de la soute via des tubulures appropriées (non représentées). Les autres références se rapportent aux éléments déjà décrits : les capots 36, le plancher de marche 1, le châssis 31

Un exemple de structure de plancher 10, en référence à la figure 4a d'une vue en perspective partielle depuis l'avant d'un cockpit 20 en cours d'aménagement, est maintenant décrit. Le volume 2 libéré et renforcé s'étend de manière transversale sur une partie importante de la largeur du cockpit 20. Ce volume est délimité par des portions latérales 15 de la structure de plancher qui conduisent la ventilation. L'air provient de tubulures (non représentées) et est canalisé à travers des orifices 151 percés dans des cloisons internes 150 et dans des parois longitudinales 152. Alternativement, les tubulures peuvent arriver directement sur la baie sans passer par les portions de plancher.

En référence à la figure 4b, une baie avionique 3" est aisément intégrée dans le volume libéré 2 de la structure de plancher 10 du cockpit 20 au cours de l'aménagement du cockpit. La baie avionique 3" est intégrée plus précisément sur une largeur couvrant tout le couloir 21 d'accès aux postes de pilotage 22 et 23 du cockpit 20. La fixation de la baie est réalisée de manière très simple en quelques points discrets, au niveau des angles et des côtés, par exemple par des cornières ou équivalent maintenues par des systèmes vis/écrous.

Un excellent accès à la baie avionique en zone sécurisée est ainsi mis en oeuvre pour la baie 3 ", en particulier une accessibilité au câblage provenant de la soute avant 40 par la paroi inférieure 320 de la baie. La paroi inférieure est libre puisque le fond des étagères est ouvert. Cet accès est aménagé à partir de la soute avant 40. De plus, l'architecture proposée présente une bonne tenue mécanique du fait de la faible profondeur relative de la baie et du maintien par le renforcement périphérique, notamment pour les charges de crash.

D'autres meubles 35 sont disposés latéralement sur les portions latérales de ventilation 15 formées dans la structure 10. Suivant les configurations, d'autres parties de structure de plancher, par exemple située juste derrière les sièges des pilotes 25 ou entre ces sièges, peuvent être libérées pour accueillir des baies avioniques de forme correspondante appropriée.

Bien entendu, l'invention n'est pas limitée aux exemples de réalisation décrits et représentés. Ainsi, les capots de la baie peuvent servir de protection thermique et phonique du cockpit vis-à-vis d'une zone technique située dans la soute. De plus, bien équipés en joints adaptés à la définition d'une étanchéité supérieure, ces capots peuvent servir de protection feu et fumée.

Par ailleurs, la baie avionique peut avoir un seul ou de multiples capots à la place des deux capots décrits.

## Revendications

1. Procédé d'intégration d'une baie avionique (3, 3', 3") dans une structure de plancher (10) d'un aéronef, **caractérisé en ce qu'**un espace (2) est préalablement libéré dans la structure de plancher (10), **en ce que** la baie (3, 3', 3") est ensuite intégrée en position horizontale dans cet espace aménagé (2) et **en ce qu'**un accès direct à cette baie (3, 3', 3") en face supérieure est aménagé au niveau du plancher (1) par une protection (36) faisant également fonction de plancher.

2. Procédé d'intégration selon la revendication 1, dans lequel une ventilation forcée de la baie est réalisée par un soufflage d'air frais distribué verticalement (F7) à partir de la paroi inférieure (320) de la baie puis extrait (F6) après échange thermique par la paroi supérieure (36).

3. Procédé d'intégration selon l'une des revendications 1 ou 2, dans lequel un transfert de charge par cisaillement est réalisé par un renforcement (113) du volume structural autour dudit espace.

4. Procédé d'intégration selon l'une quelconque des revendications précédentes, dans lequel un accès en face inférieure (320) de la baie est également aménagé à partir de la soute de pointe avant (40).

5. Procédé d'intégration selon l'une quelconque des revendications précédentes, dans lequel une fonction de fourniture d'air frais est réalisée latéralement (F2), entre les parois supérieure (36) et inférieure (320) de la baie, avant d'être dévié (F3) vers la paroi inférieure (320) puis distribué verticalement (F7) depuis la paroi inférieure.

6. Procédé d'intégration selon l'une quelconque des revendications précédentes, dans lequel une fonction d'étanchéité et de drainage de fluide est réalisée hors de la baie (3, 3', 3").

7. Procédé d'intégration selon l'une quelconque des revendications précédentes, dans lequel une fonction de collecteur d'air est dédiée à la paroi supérieure (36) en vue d'une extraction (F6) par un écoulement d'air canalisé.

8. Structure de plancher d'aéronef, en particulier d'un cockpit (20), apte à intégrer au moins une baie (3, 3', 3") selon le procédé de l'une quelconque des revendications précédentes, comportant un plancher de marche (1) et un volume structural (10) étayé par des traverses (110) sur lesquelles repose le plancher (1), **caractérisée en ce que** le volume structural (10) est pourvu d'un espace (2), la baie (3, 3', 3") étant intégrée en position horizontale dans cet espace (2).

9. Structure de plancher selon la revendication précédente, dans laquelle des ouvertures latérales (331) formées dans le châssis (31) sont aptes par couplage avec des parois verticales (311) à permettre un soufflage d'air frais ascensionnel (F7) à partir de la paroi inférieure (320) de la baie jusqu'au capot supérieur (36) et une extraction d'air par un extracteur (4) en face supérieure.

10. Structure de plancher selon l'une des revendications 8 ou 10, dans laquelle en ce qu'au droit et entre les poutrelles (110) découpées, des voiles raidisseurs (113) de transfert de charge sont agencés.

11. Structure de plancher selon l'une quelconque des revendications 8 à 10, dans laquelle la baie comporte un châssis périphérique (31) articulé avec au moins un capot de protection (36) d'accès direct à cette baie au niveau du plancher (1) et une ouverture arrière (320) d'accès en face inférieure.

12. Structure de plancher selon l'une quelconque des revendications 8 à 11, dans laquelle la baie (3, 3', 3") est compartimentée (33 ; 321, 322) en caissons comportant des parois verticales (311, 312) aptes à permettre le soufflage d'air frais ascensionnel dans chaque compartiment.

13. Structure de plancher selon l'une quelconque des revendications 8 à 12, dans laquelle le volume structural (10) du plancher est compartimenté en caissons (10, 11).

14. Structure de plancher selon l'une quelconque des revendications 9 à 13, dans laquelle les ouvertures latérales (331) sont équipées de diaphragme.

15. Structure de plancher selon l'une quelconque des revendications 11 à 14, dans laquelle les parois (311, 312) et le capot (36) de la baie (3) sont agencés en liaison avec les voiles raidisseurs (113).

## Patentansprüche

1. Verfahren zum Einbau eines Avionikmoduls (3, 3', 3") in eine Bodenkonstruktion (10) eines Flugzeugs, **dadurch gekennzeichnet, dass** ein Raum (2) zuvor in der Bodenkonstruktion (10) freigelegt wird, dass das Modul (3, 3', 3") dann in horizontaler Position in diesen eingerichteten Raum (2) eingebaut wird und dass ein direkter Zugriff auf dieses Modul (3, 3', 3") an der oberen Seite im Bereich des Bodens (1) durch eine Schutzeinrichtung (36), die auch als Boden dient, eingerichtet wird.

2. Einbauverfahren nach Anspruch 1, bei dem eine Zwangsbelüftung des Moduls durch Einblasen von Frischluft, die in vertikaler Richtung (F7) ausgehend von der unteren Wand (320) des Schranks verteilt und dann nach Wärmeaustausch durch die obere Wand (36) abgezogen (F6) wird, realisiert wird.

3. Einbauverfahren nach einem der Ansprüche 1 oder 2, bei dem eine Übertragung von Scherkräften durch eine Verstärkung (113) des Konstruktionsvolumens um diesen Raum herum realisiert wird.

4. Einbauverfahren nach einem der vorhergehenden Ansprüche, bei dem ein Zugang zur unteren Seite (320) des Moduls auch vom Frachtraum der vorderen Spitze (40) aus eingerichtet wird.

5. Einbauverfahren nach einem der vorhergehenden Ansprüche, bei dem eine Funktion der Versorgung mit Frischluft in seitlicher Richtung (F2) zwischen der oberen (36) und der unteren (320) Wand des Moduls realisiert wird, bevor sie zu der unteren Wand (320) hin umgelenkt und dann in vertikaler Richtung (F7) von der unteren Wand aus verteilt wird.

6. Einbauverfahren nach einem der vorhergehenden Ansprüche, bei dem eine Funktion der Abdichtung und der Ableitung von Fluid aus dem Modul (3, 3', 3") heraus realisiert wird.

7. Einbauverfahren nach einem der vorhergehenden Ansprüche, bei dem der oberen Wand (36) eine Luftsammel-Funktion für einen Abzug (F6) durch einen kanalisierten Luftstrom zugewiesen wird.

8. Flugzeug-Bodenkonstruktion, insbesondere für ein Cockpit (20), in die mindestens ein Modul (3, 3', 3") nach dem Verfahren nach einem der vorhergehenden Ansprüche eingebaut werden kann, mit einem Laufboden (1) und einem Konstruktionsvolumen (10), das durch Querleisten (110) versteift ist, auf denen der Boden (1) aufliegt, **dadurch gekennzeichnet, dass** das Konstruktionsvolumen (10) mit einem Raum (2) versehen ist, wobei das Modul (3, 3', 3") in horizontaler Position in diesen Raum (2) eingebaut ist.

9. Bodenkonstruktion nach dem vorhergehenden Anspruch, in der seitliche, in dem Rahmen (31) gebildete Öffnungen (331) durch Kopplung mit vertikalen Wänden (311) geeignet sind, ein aufwärts gerichtetes (F7) Einblasen von Frischluft von der unteren Wand (320) des Moduls bis zu der oberen Abdeckhaube (36) und einen Luftabzug durch einen Absauger (4) an der oberen Seite zu ermöglichen.

10. Bodenkonstruktion nach einem der Ansprüche 8 oder 10, wobei rechtwinklig und zwischen den zugeschnittenen Trägern (110) Stringerschalen (113) zur Lastübertragung eingerichtet sind.

11. Bodenkonstruktion nach einem der Ansprüche 8 bis 10, wobei das Modul einen umlaufenden Rahmen (31), der an mindestens eine Schutzhaube (36) für den direkten Zugriff auf dieses Modul im Bereich des Bodens (1) angelenkt ist, und eine hintere Öffnung (320) für den Zugang von unten aufweist.

12. Bodenkonstruktion nach einem der Ansprüche 8 bis 11, wobei das Modul (3, 3', 3") in Fächer unterteilt (33; 321, 322) ist mit vertikalen Wänden (311, 212), die geeignet sind, das aufwärts gerichtete Einblasen von Frischluft in jedes Fach zu ermöglichen.

13. Bodenkonstruktion nach einem der Ansprüche 8 bis 12, wobei das Konstruktionsvolumen (10) des Bodens in Fächer (10, 11) unterteilt ist.

14. Bodenkonstruktion nach einem der Ansprüche 9 bis 13, wobei die seitlichen Öffnungen (331) mit Membranen versehen sind.

15. Bodenkonstruktion nach einem der Ansprüche 11 bis 14, wobei die Wände (311, 312) und die Abdeckhaube (36) des Moduls (3) in Verbindung mit den Stringerschalen (113) eingerichtet sind.

## Claims

1. Method of integrating an avionics bay (3, 3', 3") in an aircraft floor structure (10), **characterized in that** a space (2) is firstly liberated in the floor structure (10), **in that** the bay (3, 3', 3") is then integrated, in a horizontal position, in this provided space (2) and **in that** a direct access to this bay (3, 3', 3") from the upper surface is made at the floor level (1) by means of a protective cover (36) also fulfilling the function of a floor.

2. Method of integration according to claim 1, in which a forced ventilation of the bay is performed by blowing fresh air which is delivered vertically (F7) from the lower wall (320) of the bay and then extracted (F6) through the upper wall (36) after thermic exchange.

3. Method of integration according to any one of claims 1 or 2, in which a transfer of shear load is made by reinforcing (113) the structural volume around of the aforementioned space.

4. Method of integration according to any one of preceding claims, in which an access through the lower surface (320) of the bay is also made from the front hold (40).

5. Method of integration according to any one of preceding claims, in which fresh air is supplied laterally (F2), between upper (36) and lower (320) walls of the bay, before being diverted (F3) towards the lower wall (320) and then delivered vertically (F7) from the lower wall.

6. Method of integration according to any one of preceding claims, in which a sealing and fluid drainage function is performed outside the bay (3, 3', 3").

7. Method of integration according to any one of preceding claims, in which a function of air collection is fulfilled by the upper wall (36) with the aim of an extraction (F6) via a flow of channelled air.

8. Floor structure of an aircraft, in particular of a cockpit (20), having the ability to integrate at least one bay (3, 3', 3") according to the method of any one of preceding claims, comprising a walking floor (1) and a structural volume (10) supported by crosspieces (110) on which the floor (1) rests, **characterized in that** the structural volume (10) comprises a space (2), the bay (3, 3', 3") being integrated in a horizontal position in said space (2).

9. Floor structure according to the preceding claim, in which side openings (331) formed in the frame (31) and associated with vertical walls (311) are able to allow fresh air blowing (F7) from the lower wall (320) of the bay up to the top cover (36) and air extraction by means of an upper surface extractor (4).

10. Floor structure according to one of claims 8 or 10, in which stiffening sheets (113) for transferring the load are arranged just in front of and between the cut girders (110).

11. Floor structure according to any one of claims 8 to 10, in which the bay comprises a peripheral frame (31) with at least one articulated protective cover (36) for direct access to said bay at the floor level (1) and an access rear opening (320) in the lower surface.

12. Floor structure according to any one of claims 8 to 11, in which the bay (3, 3', 3") is divided (33; 321, 322) in boxes comprising vertical walls (311, 312) capable to allow the upward blowing of fresh air in every compartment.

13. Floor structure according to any one of claims 8 to 12, in which the structural volume (10) of the floor is divided in boxes (10, 11).

14. Floor structure according to any one of claims 9 to 13, in which the side openings (331) are equipped with a diaphragm.

15. Floor structure according to any one of claims 11 to 14, in which the walls (311, 312) and the cover (36) of the bay (3) are arranged in connexion with the stiffening sheets (113).
